# EUROPEAN PATENT APPLICATION

(11) **EP 2 665 155 A2**
(43) Date of publication of application: **20.11.2013**
(21) Application number: 13167086.1
(22) Date of filing: 08.05.2013
(51) Int. Cl.: H02K 1/16

(54) **Dynamoelectric machine flange**

(30) Priority: 14.05.2012 US 201213470514
(71) Applicant: General Electric Company, Schenectady, New York 12345 (US)
(72) Inventor: Bandaru, Vinodh Kumar, 560066 Bangalore, Karnataka (IN); Devarakonda, Venkata Subramanya Sarma, 560066 Bangalore (IN); Robin, Rebinth Jose, 560093 Bangalore, Karnataka (IN); Salamah, Samir Armando, Schenectady, NY New York 12345 (US)
(74) Representative: Cleary, Fidelma

(57) **Abstract**

A dynamoelectric machine flange 2 having: a base section 4 having a substantially open circumferential shape, the base section including: a radially facing inner surface 6; a radially facing outer surface 8; and at least one slot 10 extending axially through a portion of the base section; and a neck portion 12 extending axially from the base section 4.

## Description

The subject matter disclosed herein relates generally to dynamoelectric machines. More particularly, aspects of the invention include a dynamoelectric machine flange.

A typical stator core assembly of a dynamoelectric machine (e.g., electric generator) generally includes a stack of thin, insulated, electrical steel laminations disposed between inside space block assemblies and outside space block assemblies. Stator flanges along with key bars, which are part of the stator frame that enclose the stator core assembly, maintain a compressive load on the laminations and the space block assemblies that can withstand electromagnetic forces that are present during operation of the dynamoelectric machine.

The stator core assembly along with other components form a stator. The stator, which is wrapped in armature winding, encloses a rotor wrapped with field winding. In the operation of the dynamoelectric machine, a turbine such as a steam turbine or gas turbine, can drive the rotor to rotate within the stator. An electromagnetic field can be induced by rotating the rotor within the stator. The electromagnetic field induced by rotating the rotor can induce eddy currents in the stator. The eddy currents are magnetically and electrically resistive and cause the dissipation of energy in the stator in the form of heat (i.e., hot spots). As a result, the eddy currents can impose a thermal constraint on the operation of the generator. One particular area in the stator where hot spots can arise is at the ends of the core stator assembly along the inner diameter of the stator flanges. Attempts to reduce hot spots at the stator flanges have included providing increased ventilation to the flanges and using flux shields disposed over the flanges to protect against the development of fluxes which induce the eddy currents. Neither approach provides an adequate solution to reducing hot spots at the stator flanges. In particular, increasing ventilation to the flanges is inadequate at reducing hot spot temperatures because this ends up increasing windage losses in the stator, and adding flux shields necessitates design efforts that translate to additional, undesirable costs.

Dynamoelectric machine flanges are disclosed. In various embodiments of the invention, a dynamoelectric machine flange can include: a base section having a substantially open circumferential shape, the base section including: a radially facing inner surface; a radially facing outer surface; and at least one slot extending axially through a portion of the base section; and a neck portion extending axially from the base section.

A first aspect of the invention includes a dynamoelectric machine flange having: a base section having a substantially open circumferential shape, the base section including: a radially facing inner surface; a radially facing outer surface; and at least one slot extending axially through a portion of the base section; and a neck portion extending axially from the base section.

A second aspect of the invention includes a dynamoelectric machine stator having: a plurality of stator punchings; and a stator flange surrounding a portion of the plurality of stator punchings, the stator flange including: a base section having a substantially open circumferential shape, the base section including: a radially facing inner surface proximate the portion of the plurality of stator punchings; a radially facing outer surface; and at least one slot extending axially through a portion of the base section; and a neck portion extending axially from the base section.

A third aspect of the invention includes dynamoelectric machine having: a rotor; and a stator substantially surrounding the rotor, the stator including: a plurality of stator punchings; and a stator flange surrounding a portion of the plurality of stator punchings, the stator flange including: a base section having a substantially open circumferential shape, the base section including: a radially facing inner surface proximate the portion of the plurality of stator punchings; a radially facing outer surface; and at least one slot extending axially through a portion of the base section; and a neck portion extending axially from the base section.

Various features of this invention will be more readily understood from the following detailed description of the various aspects of the invention taken in conjunction with the accompanying drawings that depict various embodiments of the invention, in which:
FIG. 1 shows a three-dimensional perspective view of a stator flange according to aspects of the invention.
FIG. 2 shows a three-dimensional close-up perspective view of a stator flange according to aspects of the invention.
FIG. 3 shows a three-dimensional perspective view of a portion of a dynamoelectric machine stator according to aspects of the invention.

It is noted that the drawings of the invention are not to scale. The drawings are intended to depict only typical aspects of the invention, and therefore should not be considered as limiting the scope of the invention. In the drawings, like numbering represents like elements between the drawings.

The subject matter disclosed herein relates to a flange for a dynamoelectric machine. More particularly, aspects of the invention include a dynamoelectric machine flange having an axially extending cooling passage.

In contrast to conventional stator flanges in a dynamoelectric machine, aspects of the invention provide for a stator flange having at least one aperture extending at least partially therethrough. In one embodiment, the at least one aperture can include a set of slots (or, slots) extending through a radially facing inner surface of the stator flange. That is, the set of slots can extend through a portion of the inner surface of the stator flange, where that inner surface defines the inner diameter of the flange. In some embodiments, the slots can extend across a corner of the radially facing inner surface and an adjacent surface (e.g., an axially facing surface). In other cases, the slots could extend entirely through a portion of the flange, at least partially extending in the axial direction. In some cases, the slots can extend axially through an interior portion of the flange, allowing for fluid to flow through the flange in the axial direction. In this case, the slots may not contact the radially inner surface.

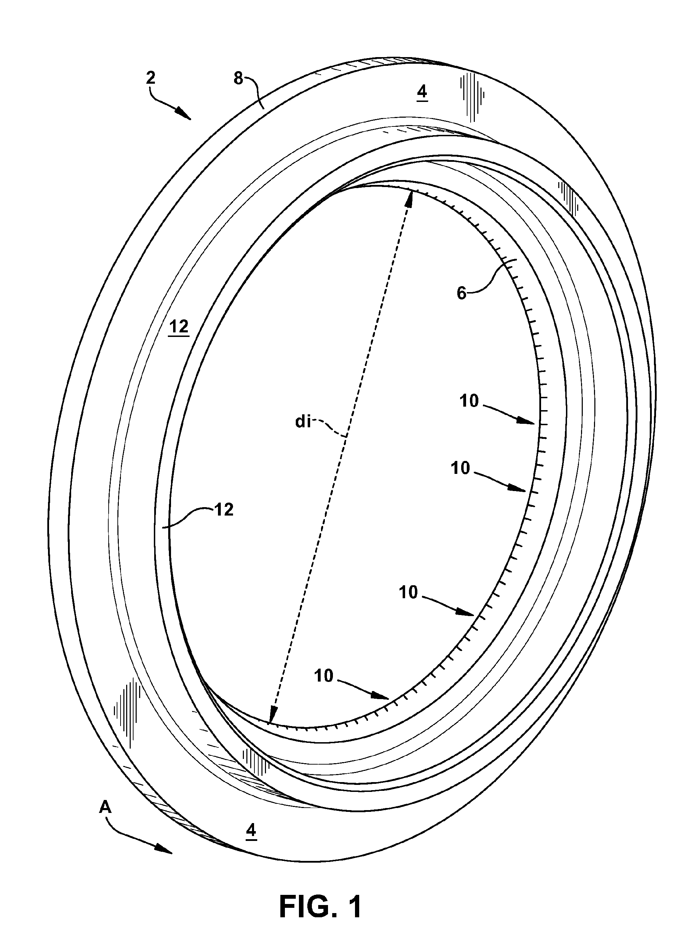

FIG. 1 shows a three-dimensional perspective view of dynamoelectric machine flange (or, flange) 2. In particular, this perspective view shows portions of the flange 2 facing axially outwardly. The flange 2 is shown including a base section 4 having a substantially open circumferential shape, where the base section 4 includes a radially facing inner surface 6 and a radially facing outer surface 8. The flange 2 can further include at least one slot 10 extending axially through a portion of the base section 4. The flange 2 can further include a neck section 12 extending axially from the base section 4.

As used herein, the term "axially" is intended to refer to a direction running approximately parallel with an axis of a dynamoelectric machine, indicated by directional arrow "A" in the figures. The term "radially" is intended to refer to a direction running approximately perpendicular to the axial direction. Aspects of the invention provide for a dynamoelectric machine flange (e.g., flange 2), and that flange is designed to interact with other components in the dynamoelectric machine. The terms "axial" and "radial" are intended to clarify the relationship of the flange with those other components.

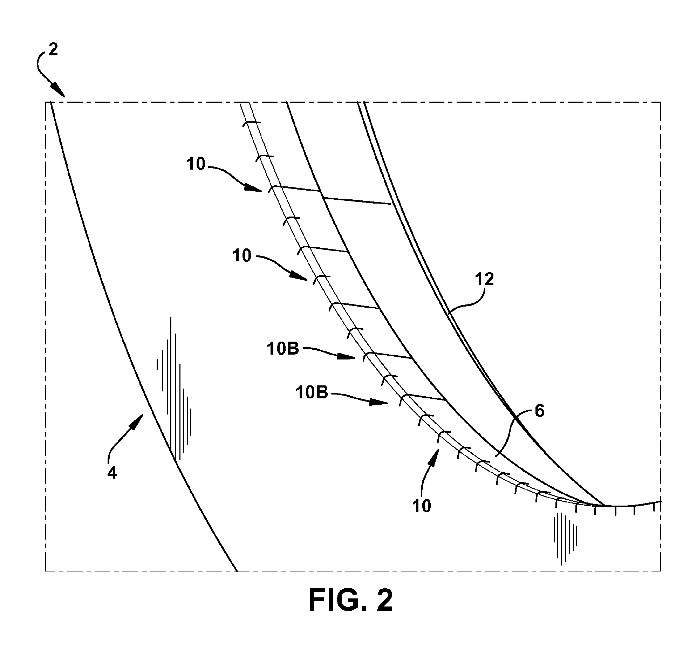

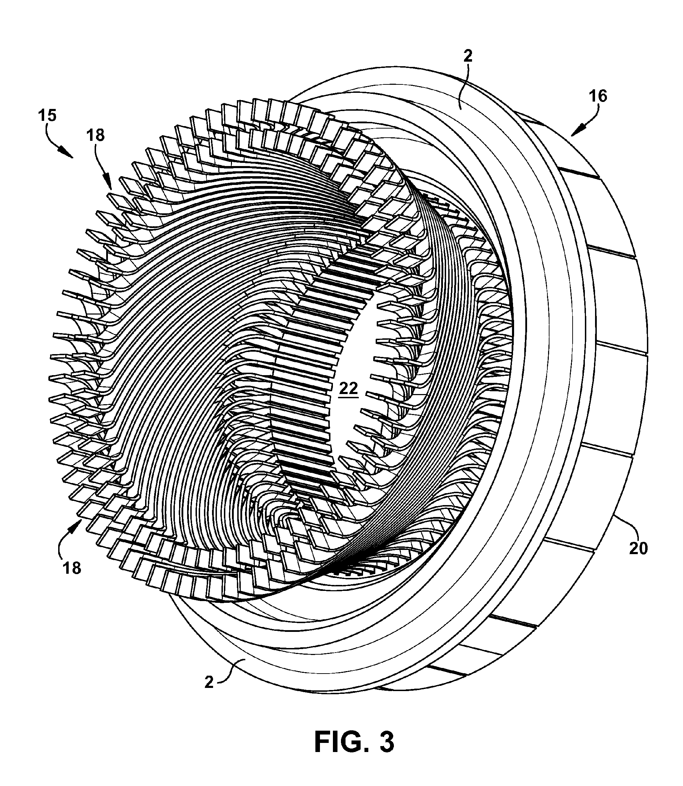

As shown, in some embodiments the flange 2 can include a plurality of slots 10 disposed circumferentially about the base section 4. In some cases, the at least one slot 10 extends through the radially facing inner surface 6 and an axially facing adjacent surface 14 (shown in FIG. 2), such that the slot 10 essentially extends through a corner between the adjacent surfaces 6, 14. In some embodiments, as shown in FIG. 2, the axially facing adjacent surface 14 (through which a portion of the slot 10 extends), can be an axially inwardly facing surface. That is, this surface can face away from the group of end windings (shown in FIG. 3) and toward the axial center of a dynamoelectric machine including the flange 2.

As can be seen in FIG. 1, and in the close-up three-dimensional perspective view of a portion of the flange 2 in FIG. 2, the radially facing inner surface 14 can define an inner diameter (dᵢ) of the dynamoelectric machine flange 2. FIG. 2 illustrates in phantom another embodiment in which at least one slot 10B extends entirely axially through the base section 4. As is further illustrated in FIG. 2, in some embodiments, at least one slot 10C further extends axially through a portion of the neck section 12. In some cases, the slot 10C extends entirely axially through the neck section 12 (as well as the base section 4).

In all embodiments described herein, the slot(s) 10 (including 10B and 10C) are positioned to allow a fluid (e.g., a cooling fluid such as hydrogen) to pass therethrough, allowing for cooling of the flange 2 though the slot(s) 10 via enhanced heat transfer across the slot surfaces. In some cases, the slot(s) 10 are positioned to reduce one or more eddy currents in the flange 2. In this case, the slot(s) 10 can disrupt the physical continuity in the flange 2 and thereby disrupt the induction-induced eddy currents generated in the flange 2 by nearby stator punchings (FIG. 3).

FIG. 3 shows a three-dimensional perspective view of a portion of a dynamoelectric machine 15 according to embodiments of the invention. As shown, the dynamoelectric machine 15 includes a stator 16 having a plurality of punchings (or windings) 18 which are disposed circumferentially about a stator body 20. The configuration of punchings 18 and stator body 20 are known in the art, and as such, are not further described. As is known in the art, the stator 16 substantially surrounds a dynamoelectric machine rotor (or, rotor) 22 (schematically depicted), which can include a plurality of conductive coils (not shown). During operation, rotation of the rotor 22 (including its conductive coils) induces a magnetic field change in the dynamoelectric machine 15 and generates electrical current flow in the plurality of stator punchings 18.

The dynamoelectric machine 15 can further include a flange 2 such as the flange shown and described with reference to FIGS. 1-2. The flange 2 can surround a portion of the plurality of stator punchings 18, and the flange 2 may be located proximate (e.g., in contact with or nearly contacting) the portion of the punchings 18. As described herein, the flange 2 having one or more slots 10 (not visible in FIG. 3) according to embodiments of the invention can reduce the heat generated by a dynamoelectric machine 15 implementing such a flange 2. The slots 10 can reduce eddy currents, and the heat generated by such eddy currents, in the flange 2. Additionally, these slots 10 can allow for the flow of a cooling fluid (e.g., hydrogen) therethrough, which can allow for improved cooling of the flange 2 by increased heat transfer across the surfaces of the slots 10.

In some example cases, use of one or more flange(s) 2 including slots 10 can reduce the flange "hot-spot" when compared with conventional flanges without slots 10. This flange "hot-spot" is the warmest zone of the dynamoelectric machine flange as indicated by conventional heat mapping techniques. In addition to reducing hot-spot temperature, the use of one or more slots 10 has been shown in some example cases to reduce the eddy currents in the flange when compared with conventional flanges without slots 10. Therefore, aspects of the invention provide for a dynamoelectric machine flange that reduces eddy currents (and associated heating effects) and reduces hot-spot temperature when compared with conventional flanges.

It is understood that while various embodiments of the invention include a flange having a base section and a neck section, that aspects of the invention can be applied to "neckless" flanges which have a substantially continuous profile. Similar to the flanges 2 described herein, these neckless flanges can include one or more slots 10 for reducing hot-spot/eddy current effects in such a flange.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. It is further understood that the terms "front" and "back" are not intended to be limiting and are intended to be interchangeable where appropriate.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A dynamoelectric machine flange comprising:
   a base section having a substantially open circumferential shape, the base section including:
      a radially facing inner surface;
      a radially facing outer surface; and
      at least one slot extending axially through a portion of the base section; and
   a neck portion extending axially from the base section.
2. The dynamoelectric machine flange of clause 1, wherein the at least one slot includes a plurality of slots disposed circumferentially about the base section.
3. The dynamoelectric machine flange of any preceding clause, wherein the at least one slot extends through the radially facing inner surface and an axially facing adjacent surface.
4. The dynamoelectric machine flange of any preceding clause, wherein the radially facing inner surface defines an inner diameter of the dynamoelectric machine flange.
5. The dynamoelectric machine flange of any preceding clause, wherein the at least one slot extends entirely axially through the base section.
6. The dynamoelectric machine flange of any preceding clause, wherein the at least one slot further extends axially through a portion of the neck section.
7. The dynamoelectric machine flange of any preceding clause, wherein the at least one slot is positioned to allow a fluid to pass therethrough.
8. The dynamoelectric machine flange of any preceding clause, wherein the at least one slot is positioned to reduce an eddy current in the dynamoelectric machine flange.
9. A dynamoelectric machine stator comprising:
   a plurality of stator punchings; and
   a stator flange surrounding a portion of the plurality of stator punchings, the stator flange including:
      a base section having a substantially open circumferential shape, the base section including:
         a radially facing inner surface proximate the portion of the plurality of stator punchings;
         a radially facing outer surface; and
         at least one slot extending axially through a portion of the base section; and
      a neck portion extending axially from the base section.
10. The dynamoelectric machine stator of any preceding clause, wherein the at least one slot includes a plurality of slots disposed circumferentially about the base section.
11. The dynamoelectric machine stator of any preceding clause, wherein the at least one slot extends through the radially facing inner surface and an axially facing adjacent surface.
12. The dynamoelectric machine stator of any preceding clause, wherein the radially facing inner surface defines an inner diameter of the stator flange.
13. The dynamoelectric machine stator of any preceding clause, wherein the at least one slot extends entirely axially through the base section.
14. The dynamoelectric machine stator of any preceding clause, wherein the at least one slot further extends axially through a portion of the neck section.
15. The dynamoelectric machine stator of any preceding clause, wherein the at least one slot is positioned to allow a fluid to pass therethrough.
16. The dynamoelectric machine stator of any preceding clause, wherein the at least one slot is positioned to reduce an eddy current in the stator flange.
17. A dynamoelectric machine comprising:
   a rotor; and
   a stator substantially surrounding the rotor, the stator including:
      a plurality of stator punchings; and
      a stator flange surrounding a portion of the plurality of stator punchings, the stator flange including:
         a base section having a substantially open circumferential shape, the base section including:
            a radially facing inner surface proximate the portion of the plurality of stator punchings;
            a radially facing outer surface; and
            at least one slot extending axially through a portion of the base section; and
         a neck portion extending axially from the base section.
18. The dynamoelectric machine of any preceding clause, wherein the at least one slot includes a plurality of slots disposed circumferentially about the base section.
19. The dynamoelectric machine of any preceding clause, wherein the at least one slot extends through the radially facing inner surface and an axially facing adjacent surface.
20. The dynamoelectric machine of any preceding clause, wherein the at least one slot extends entirely axially through the base section.

## Claims

1. A dynamoelectric machine flange (2) comprising:
a base section (4) having a substantially open circumferential shape, the base section (4) including:
a radially facing inner surface (6);
a radially facing outer surface (8); and
at least one slot (10) extending axially through a portion of the base section (4); and
a neck portion (12) extending axially from the base section (4).

2. The dynamoelectric machine flange (2) of claim 1, wherein the at least one slot (10) includes a plurality of slots disposed circumferentially about the base section.

3. The dynamoelectric machine flange (2) of any preceding claim, wherein the at least one slot (10) extends through the radially facing inner surface (6) and an axially facing adjacent surface.

4. The dynamoelectric machine flange (2) of any preceding claim, wherein the radially facing inner surface (6) defines an inner diameter of the dynamoelectric machine flange (2).

5. The dynamoelectric machine flange (2) of any preceding claim, wherein the at least one slot (10) extends entirely axially through the base section (4).

6. The dynamoelectric machine flange (2) of any preceding claim, wherein the at least one slot (10) further extends axially through a portion of the neck section (12).

7. The dynamoelectric machine flange (2) of any preceding claim, wherein the at least one slot (10) is positioned to allow a fluid to pass therethrough.

8. The dynamoelectric machine flange (2) of any preceding claim, wherein the at least one slot (10) is positioned to reduce an eddy current in the dynamoelectric machine flange.

9. A dynamoelectric machine stator (15) comprising:
a plurality of stator punchings (18); and
a stator flange (2) surrounding a portion of the plurality of stator punchings, the stator flange including:
a base section (4) having a substantially open circumferential shape, the base section including:
a radially facing inner surface (6) proximate the portion of the plurality of stator punchings;
a radially facing outer surface (8); and
at least one slot (10) extending axially through a portion of the base section; and
a neck portion (12) extending axially from the base section.

10. The dynamoelectric machine stator (15) of claim 9, wherein the at least one slot (10) includes a plurality of slots disposed circumferentially about the base section.

11. The dynamoelectric machine stator (15) of claim 9 or claim 10, wherein the at least one slot (10) extends through the radially facing inner surface and an axially facing adjacent surface.

12. The dynamoelectric machine stator (15) of any of claims 9 to 11, wherein the radially facing inner surface (6) defines an inner diameter of the stator flange (2).

13. The dynamoelectric machine stator (15) of any of claims 9 to 12, wherein the at least one slot (10) extends entirely axially through the base section (4).

14. The dynamoelectric machine stator (15) of claim 13, wherein the at least one slot further extends axially through a portion of the neck section (12).

15. The dynamoelectric machine stator of (15) of any of claims 9 to 14, wherein the at least one slot (10) is positioned to allow a fluid to pass therethrough.
